# EUROPEAN PATENT APPLICATION

(11) **EP 1 554 924 A1**
(43) Date of publication of application: **20.07.2005**
(21) Application number: 03809431.4
(22) Date of filing: 12.09.2003
(51) Int. Cl.: A01G 9/14, A01G 13/02

(54) **HEAT-INSULATING MATERIAL FOR AGRICULTURAL OR HORTICULTURAL FACILITY**

(30) Priority: 24.10.2002 JP 2002309101
(71) Applicant: SUMITOMO METAL MINING COMPANY LIMITED, Tokyo 105-8716 (JP)
(72) Inventor: Kuno, Hiroko Ichikawa Research Laborator, Ichikawa-shi, Chiba 272-8588 (JP)
(74) Representative: Leson, Thomas Johannes Alois, Dipl.-Ing.
(86) International application number: PCT/JP2003/011718
(87) International publication number: WO 2004/036978

(57) **Abstract**

A heat shielding material for an agricultural and horticultural facility according to this invention includes a heat shield layer constituted of a substrate resin and a heat shield filler in the form of fine particles dispersed in the resin. The heat shield filler is at least one selected from lanthanum hexaboride and antimony-doped tin oxide, and the substrate resin is at least one selected from among resins of polyethylene, polyvinyl chloride, polyvinylidene chloride, polyvinyl alcohol, polystyrene, polypropylene, poly(ethylenevinyl acetate) and polyester. This heat shielding material for an agricultural and horticultural facility has a visible light transmittance of 30 to 90% and a solar radiation transmittance of 10 to 80%, the visible light transmittance being larger by 10% or above than the solar radiation transmittance.

## Description

### TECHNICAL FIELD

This invention relates to a film- or board-like material useful as a roof material, an outer wall material, etc., in agricultural and horticultural houses. More particularly, it relates to a heat shielding material for an agricultural and horticultural facility, which has the effect of shielding heat.

### BACKGROUND ART

In the conventional art, almost all agricultural and horticultural facilities, including agricultural houses and horticultural houses, have been designed to retain interior warmth. As the materials for roofs, outer walls, etc., of the facilities, resin films and resin plates have generally been used.

However, the need for warmth retention can be nearly satisfied by blocking outdoor air from entry into such a facility. In contrast, in order that the indoor temperature in the facility may not become unnecessarily increased except in the winter season, temperature control has been required to perform by opening and closing portions of the roof and outer wall. Also, where direct sunlight is too intense, crops being cultivated tend to discolor at their surface portions, and in extreme cases, they tend to kill on account of excessive rises in soil temperature.

To take measures against these problems, Japanese Patent Laid-Open No. 61-111350, etc., propose a light-blocking agricultural film containing aluminum powder, white pigment, carbon black, etc. However, since this film is not only great in the light blocking effect, but also remarkably low in the light ray transmittance at a wavelength of 380 to 780 nm which is a wavelength band required for the growth of plants, leaf vegetables in particular are prone to cause unwanted lengthening in the leaves and stems, or physiological disorder.

Furthermore, Japanese Patent Laid-Open No. 8-277349 describes a thermoplastic resin film for agricultural use, which intends to prevent disorder at elevated temperatures by the use of a copper complex-containing polyolefin resin. In Japanese Patent Laid-Open No. 9-330612, a member for OA equipment is proposed which is formed from a resin having added thereto a coloring matter capable of absorbing near-infrared light, thereby providing a heat shielding characteristic. In addition, Japanese Patent Laid-Open No. 6-118228 proposes a heat shielding resin containing copper ions for use in an optical filter.

The coloring matter and copper proposed in the above-cited respective publications, however, are low in weather resistance and liable to deteriorate upon exposure to ultraviolet light, heat, etc. Thus, if a resin after being formulated to contain the coloring matter or copper is used as a heat shielding material, this resin has a disadvantage in that when it is exposed outdoors for a prolonged period of time, its heat shielding effect becomes prematurely deteriorated. In the case of the coloring matter, the resin has another drawback that since bleeding tends to develop, the resin surface leads to whitening and hence results in sharp lowering of the light transmittance. It has thus been difficult to use resin films, etc., which contain coloring matters and copper ions, as materials particularly for agricultural and horticultural facilities, over a long period of time.

Therefore, a growing demand exists for a material which has a heat shielding characteristic, while transmitting visible light required for plant growth, and a high weather resistance, for use as a roof material, an outer wall material, etc., in an agricultural and horticultural facility. In the existing circumstances, however, film- or board-like materials are rarely provided which meet such requirements.

In the light of this conventional situation, it is one object of the present invention to provide a heat shielding material for an agricultural and horticultural facility, which is in a film- or board-like form useful as a roof material, an outer wall material, etc., in agricultural and horticultural houses, and which is excellent in weather resistance and capable of screening near-infrared light efficiently, while transmitting visible light to hold brightness as required.

### DISCLOSURE OF THE INVENTION

In order to achieve the above-mentioned object, a heat shielding material for an agricultural and horticultural facility, provided in accordance with the present invention, comprises a heat shield layer comprising a substrate resin and a heat shield filler in the form of fine particles dispersed in the substrate resin, wherein the heat shield filler is at least one selected from lanthanum hexaboride and antimony-doped tin oxide, and the substrate resin is at least one selected from polyethylene resin, polyvinyl chloride resin, polyvinylidene chloride resin, polyvinyl alcohol resin, polystyrene resin, polypropylene resin, poly(ethylene-vinyl acetate) resin and polyester resin.

Further, the heat shielding material for an agricultural and horticultural facility according to the invention, has a visible light transmittance in the range of 30 to 90%, and a solar radiation transmittance in the range of 10 to 80%, wherein the visible light transmittance is set to be larger by 10% or above than the solar radiation transmittance.

In the heat shielding material for an agricultural and horticultural facility according to the invention, the content of the heat shield filler in the above-described heat shield layer is in the range of 0.01 to 1 g/m² in case of the lanthanum hexaboride and in the range of 1.0 to 50 g/m² in case of the antimony-doped tin oxide.

Additionally, the heat shielding material for an agricultural and horticultural facility according to the invention is in a film- or board-like form consisting of the above-described heat shield layer, or in a form in which the above-described heat shield layer has been laminated on the surface of a film- or board-like matrix material, or has been sandwiched between two of the matrix material.

In the meanwhile, in the present invention, each of the above-noted values of light transmittances is one obtained by measurement based on JIS A 5759 (1998) (light source: light A), which is concerned with films for use in building windowpanes, and then by calculation of the measurements. However, samples to be measured were used as they were in a film- or board-like form without attachment to glass. Here, the solar radiation transmittance is a transmittance of light in a wavelength band of 350 to 2100 nm, and in the invention, it was employed as a reference index for evaluating the heat shielding properties of a heat shielding material for an agricultural and horticultural facility with respect to sunlight. In addition, the visible light transmittance is a transmittance of light in a wavelength band of 380 to 780 nm, and it was employed as a reference index for evaluating the brightness with respect to the human eye.

### BRIEF DESCRIPTION OF THE DRAWINGS

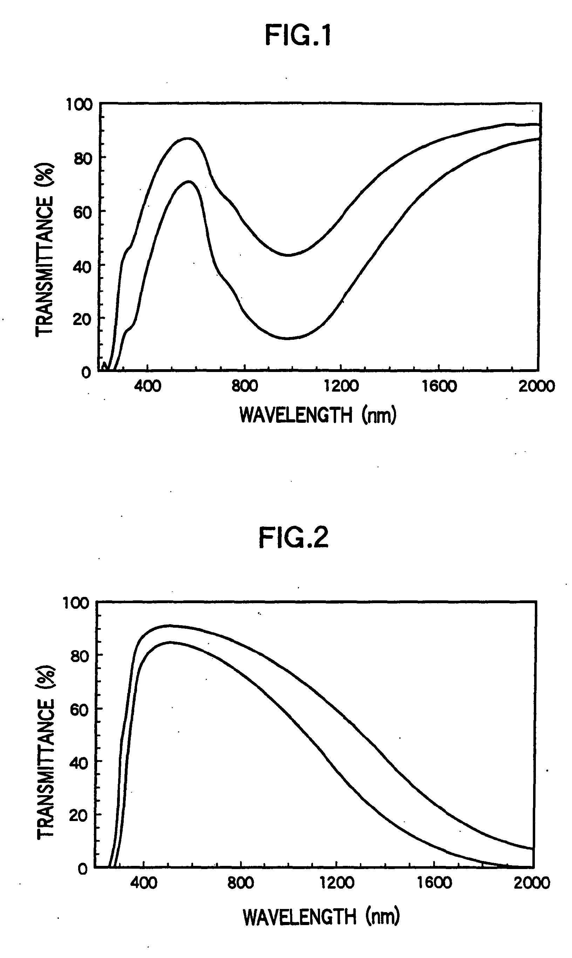

Fig. 1 is a graph showing the transmittance spectra of films having fine particles of LaB₆ dispersed therein (two films are illustrated which differ in the weights of fine particles per 1 m², and an upper profile represents a transmittance spectrum of a film containing the fine particles in a smaller weight).
Fig. 2 is a graph showing the transmittance spectra of films having fine particles of ATO dispersed therein (two films are illustrated which differ in the weights of fine particles per 1 m², and an upper profile represents a transmittance spectrum of a film containing the fine particles in a smaller weight).

### BEST MODE FOR PRACTICING THE INVENTION

The present invention will be described below in greater detail.

First of all, the heat shielding material for an agricultural and horticultural facility according to the invention is in a film- or board (plate)-like form useful as a roof material, an outer wall material, etc., in agricultural and horticultural houses, and it comprises a heat shield layer comprising a substrate resin and a heat shield filler in the form of fine particles dispersed in the resin. Particularly, as the heat shield filler, either one or both of lanthanum hexaboride (LaB₆) or antimony-doped tin oxide (SnO₂ + Sb₂O₅: hereinafter often called ATO in shorthand) can be used which is capable of screening near-infrared light efficiently and also of imparting a superior heat shielding effect.

In the heat shielding material for an agricultural and horticultural facility, the target for heat to be shielded is the heat energy induced from sunlight. The sunlight is said to reach the ground level generally in a wavelength band of about 290 to 2100 nm, and among this band, the light at a wavelength of about 380 to 780 nm in a visible light region is one required to maintain brightness in the facility and to grow plants. In order to heat-shield the sunlight, it is thus preferable to choose a certain material which enables near-infrared light of about 780 to 2100 nm to be selectively efficiently screened, thereby contributing to heat shielding properties.

Furthermore, with regard to the light in an ultraviolet region, optimum cultivation conditions exist depending upon the plants to be cultivated, or the species, etc., of insects to be used for pollination, but a wavelength band of 290 to 320 nm must generally be controlled. To be specific, this is because the screening of a proper quantity of ultraviolet light in this wavelength band is effective in inhibiting damage caused by noxious insects and plant diseases. Many agricultural films so far used in the art may screen ultraviolet light to some extent, and plants bred under such conditions do not need a lot of ultraviolet light. However, it is not desirable to screen a large portion of ultraviolet light because the pollination using insects such as honeybees, etc., is not actively attained, or the growth of plants is adversely affected.

As shown in Fig. 1, the transmittance spectrum of each film having the LaB₆ fine particles dispersed therein is large in the light transmittance in a visible light region and has a transmittance peak in the vicinity of a wavelength of 550 nm. Since this transmittance peak is identical to the wavelength to which the eye is most highly sensitive, it is advantageous in holding brightness in the facility. Further, a large absorption is present in the vicinity of a wavelength of 1000 nm, and it is thus possible to screen near-infrared light efficiently, thereby shielding the sunlight-induced heat energy efficiently. In addition, LaB₆'s absorption of ultraviolet light is so small that it does not exert any detrimental effects on the pollinating activities by insects and the growth of plants. Meanwhile, the transmittance of ultraviolet light at a wavelength of 290 to 320 nm can be controlled by adjusting the amount of the LaB₆ fine particles to be added to the substrate resin.

Where the transmittance in an ultraviolet region needs to be further controlled, ultraviolet-screening inorganic materials, organic materials, and inorganic-organic composite materials, such as cerium oxide, titanium oxide, zirconium oxide, zinc oxide, benzophenone type ultraviolet absorbers, etc., may be added to fulfill the intended objective. Here, the above-mentioned ultraviolet absorbers of an inorganic type generate, when absorbing ultraviolet light, electrons and holes on the surfaces, consequently bringing about the possibility of substrate resins that will deteriorate. Desirably, therefore, they have been coat-treated on the surfaces. For the surface coating treatment, a variety of coupling agents, surface improvers, sol-gel silicates, etc., are typical, but any method is available so long as it is effective in preventing the resin from being deteriorated.

In this way, the heat shielding material of the present invention, which contains the LaB₆ fine particles as the heat shield filler, has a heat shielding characteristic by virtue of its efficient screening of sunlight in a near-infrared region, and at the same time, can hold sufficient brightness inside the facility by virtue of its good transmittance characteristic in a visible light region around the vicinity of a wavelength of 550 nm. What is better, the heat shielding material is characteristic in that it transmits ultraviolet light at a wavelength of 320 nm or below, whereby honeybees, etc., which contribute to the pollination can do active work, and stable harvests can be expected.

Also shown in Fig. 2 is the transmittance spectrum of each film having the ATO fine particles dispersed therein. As is understood from Fig. 2, this spectrum indicates a transmittance profile having a large portion at a wavelength of 380 to 780 nm in a visible light region and a flat portion. Because the absorption in a visible light region is almost absent, the interior in the facility can be held bright. Simultaneously, because the absorption at a wavelength of 800 nm or above in a near-infrared region is present, an enhanced heat shielding effect is obtained. Moreover, because the transmittance at a wavelength of 290 to 320 nm in an ultraviolet region is obtained, the pollination by honeybees, etc., is scarcely adversely affected.

Also in the case of ATO as previously described as to LaB₆, ultraviolet-screening inorganic materials, organic materials, and organic-inorganic composite materials may be added to control the transmittance in an ultraviolet region, and ultraviolet absorbers of an inorganic type may be desirably coat-treated on the surfaces in order to prevent the corresponding substrate resins from being deteriorated. Also preferably, the surfaces of the ATO fine particles may be coat-treated to avoid optical degradation.

As just described, the heat shielding material of the present invention, which contains the ATO fine particles as the heat shield filler, is colorless and transparent in a visible light region and thus sufficient to hold interior brightness in the facility. The heat shielding material has an enhanced heat shielding effect since it absorbs or screens a near-infrared region, and also has a transmittance in an ultraviolet region.

Additionally, a combination of LaB₆ and ATO can be used as the heat shield filler, and in this instance, a heat shielding material is obtained with a more effective heat shielding characteristic. Namely, as shown in Figs. 1 and 2, LaB₆ has a large absorption in the vicinity of a wavelength of 1000 nm, whereas ATO has a gradually increasing absorption at wavelengths of 800 nm and above. Therefore, by dispersing the two types of fine particles in the substrate resin, the absorption or screening in a near-infrared region comes to be far larger and more efficient than that in the case of use of either one type, whereby a far higher heat shielding characteristic can be obtained.

Thus, the heat shielding material for an agricultural and horticultural facility according to the present invention, which contains the fine particles of LaB₆ and/or ATO as the heat shield fillers, has three characteristics in a masse, i.e., the transmittance in a visible light region that holds desired brightness, the absorption in a near-infrared region that provides an enhanced heat shielding effect, and the transmittance in an ultraviolet region. The heat shielding material, therefore, is significantly useful as a roof material, an outer wall material, etc., in an agricultural and horticultural facility such as a house, etc. Further, since these heat shield fillers are of inorganic materials, they provide a higher weather resistance than those of organic materials and are especially excellent as a heat shielding material for an agricultural and horticultural facility usually put to outdoor use.

In the heat shielding material for an agricultural and horticultural facility according to the invention, it is important that the transmittance in a visible light region and the absorption in a near-infrared region should optically be well balanced. To be more specific, the visible light transmittance is preferably in the range of 30 to 90%, more preferably 60 to 90%. Simultaneously, the solar radiation transmittance is preferably in the range of 10 to 80%, more preferably 10 to 70%. In addition, in regard to the difference between the visible light transmittance and the solar radiation transmittance, it is even more preferable to set the visible light transmittance to be large by 10% or above as compared to the solar radiation transmittance.

The particle diameters of the above-described heat shield fillers in the form of fine particles (also including agglomerate particles) can be optionally chosen according to whether a scattering effect is utilized. For example, if the particle diameter of the heat shield filler dispersed in the substrate resin for the heat shield layer is 200 nm or below, particularly 100 nm or below, sunlight scattering becomes markedly small, and the sunlight comes to arrive directly at the plants and ground level. Moreover, since the light in a visible light region is hardly scattered as well, it is possible to easily observe the indoor conditions in the facility such as a house, etc., from the outside, and it is likewise possible to confirm the outdoor conditions from the interior of the facility.

On the other hand, if the particle diameter of the heat shield filler dispersed in the substrate resin for the heat shield layer exceeds 200 nm, sunlight scatters largely, and the light traveling to arrive at the plants and ground level becomes uniform, whereby the plants are little affected by the shades of the frames in the house, etc. But then, the light in a visible light region scatters simultaneously, and it thus becomes difficult to observe the indoor conditions of the facility from the outside, even though the facility can be held interiorly bright as required.

There are numerous methods for controlling the particle diameters of LaB₆ and ATO. To reduce the particle diameters, such methods as medium stirring milling, ultrasonic treatment, impact pulverization, pH control, etc., are available, and these may be chosen to meet the target application including the choice of a wet or dry process, etc. In particular, in dispersing fine particles with a particle diameter of 200 nm or below, a variety of coupling agents, dispersing agents and surface active agents may be used to enable stable dispersion and to ensure stable retention of the dispersed particles after treatment.

Where the heat shield layer in the heat shielding material for an agricultural and horticultural facility is formed, the fine particles of LaB₆ and/or ATO as the heat shield fillers can be kneaded into the resin, followed by molding of the resin. For kneading in the resin, the particle diameters of the fine particles may be controlled, if necessary, by the above-mentioned methods. Furthermore, the fine particles of LaB₆ and ATO are thermally stable and may thus be kneaded at temperatures (approximately 100 to 300°C) in the vicinity of the melting points of various corresponding resins.

As the substrate resin that serves as a matrix for the heat shield layer, at least one resin is used which is selected from polyethylene resin, polyvinyl chloride resin, polyvinylidene chloride resin, polyvinyl alcohol resin, polystyrene resin, polypropylene resin, poly(ethylene-vinyl acetate) resin and polyester resin. To these resins, additives such as stabilizers, stabilizing auxiliaries, antioxidants, plasticizers, lubricants, etc., may be added.

The resin, in which the fine particles of LaB₆ and/or ATO have been kneaded, can be molded into a film- or board-like form, e.g., by means of extrusion, inflation, solution casting, calendering, etc. Meanwhile, although the thickness of a film or a board to be formed may be optionally set to suit the target application, it is generally in the range of 10 to 1000 µm in case of the film, preferably 20 to 500 µm, and preferably in the range of 2 to 15 mm in case of the board. Also preferably, the amount of the fine particles of LaB₆ and/or ATO to be kneaded in the resin is usually 50% by weight or below relative to the resin, when handling, etc., during kneading and formation are considered.

The content of the heat shield filler uniformly dispersed in the heat shield layer can be varied depending on the thicknesses of heat shield layers to be formed, the thicknesses of matrix materials to be used for lamination where needed, and the optical characteristics and heat shielding characteristics to be targeted. For example, LaB₆ has a high heat shielding efficiency per unit weight, and thus in its content of 0.01 g or more per 1 m² of a heat shield layer, an effective heat shielding effect is obtained. And 1 g/m² is capable of screening about 90% of sunlight-induced heat energy and thus effective enough to shield heat in summer. In light of the warmth retaining effect in winter, it is not preferable to add a larger amount than this content. Hence, the content of LaB₆ should be preferably in the range of 0.01 to 1 g/m².

Furthermore, when the heat shield filler is ATO, a content of about 3 g per 1 m² of a heat shield layer is capable of screening approximately 30% of sunlight-induced heat energy. In general, in a content of less than 1.0 g/m², the heat shielding effect is not sufficient, whereas a content exceeding 50 g/m² is not desirable because it results in cost rise as well as difficult processing into a heat shielding material. Hence, the content of ATO should be preferably in the range of 1.0 to 50 g/m².

The heat shielding material for an agricultural and horticultural facility according to the present invention, which contains a heat shield layer of a substrate resin having dispersed therein the above-described fine particles of LaB₆ and/or ATO, is in a form as heretofore used in the art for a roof material and an outer wall material in an agricultural house, etc., that is, in a film- or board (plate)-like form. Generally, the heat shielding material is in a single film- or board-like form consisting of the above-described heat shield layer. It also may be of a laminated structure in which the above-described heat shield layer has been laminated on the surface of a film- or board-like matrix material prepared separately and made of resin, glass, etc., or in which at least one of the above-described heat shield layer has been sandwiched between two such matrix materials.

Also with regard to the heat shielding material for an agricultural and horticultural facility in the above-mentioned laminated structure, this can be produced, e.g., by coating a heat shield layer containing the fine particles of LaB₆ and/or ATO on either one or both surfaces of a matrix material made of an existing resin film or board, or a glass plate, etc. Any coating method is available if it can form a uniform film on the matrix surfaces. Bar coating, gravure coating, spray coating, dip coating, etc., for example, may be employed.

Where a heat shield layer is formed by the above-mentioned coating methods, ultraviolet curing resin can preferably be used as a resin or binder for retaining the fine particles. More specifically, it is possible to mix an ultraviolet curing resin and a heat shield filler having a proper particle diameter, thereby preparing a liquid or paste, and then, to coat the liquid or paste on the surface of a matrix material, and to evaporate the solvent, followed by curing of the coat by means of ultraviolet irradiation. Moreover, by using hard coating resin as the ultraviolet curing resin, a heat shield layer can be obtained with an improved surface abrasion strength, whereby a surface characteristic is provided which is resistant to scratching even upon collision of dust, etc. In such an instance, fine particles of SiO₂, etc., may be added to further improve the abrasion strength.

Furthermore, where the heat shield layer is coated as mentioned above, the matrix surfaces are preferably pretreated to improve their adhesion to the heat shield layer. Due to this surface treatment, the wetting properties of the matrix surfaces are simultaneously improved to prevent repelling during coating, thereby enabling a uniform coating to be easily obtained. As the surface-treating method, corona treatment, sputter treatment, primer coating treatment, etc., are well known.

Additionally, where a heat shielding material for an agricultural and horticultural facility is formed by sandwiching a heat shield layer between the above-mentioned two matrix materials, such laminating resin as, e.g., vinyl chloride copolymer, etc., can also be used as a resin or binder for retaining the fine particles of the heat shield filler. Moreover, by mixing the fine particles of the heat shield filler and room temperature-curing resin, and then by coating the mixture over the roof and outer wall materials in an existing agricultural and horticultural facility, it is also possible to impart heat shielding characteristics in a post-treated manner. As just described, heat shielding characteristics can be imparted to matrix materials by choosing substrate resins to satisfy the intended objective and application.

The present invention is illustrated below by referring to its examples.

### [Example 1]

20 Parts by weight of LaB₆ fine particles (specific surface area: 30 m²/g), 75 parts by weight of toluene, and 5 parts by weight of a dispersing agent were mixed to obtain Dispersion A in which the fine particles of LaB₆ with an average dispersed particle diameter of 80 nm had been dispersed. From this Dispersion A, solvent components were removed at 50°C with a vacuum dryer to obtain dispersion-treated Powder A of LaB₆. Here, the average particle diameter noted above is an average value obtained by measurement on a measuring device using a dynamic light scattering process (manufactured by Ohtsuka Electronics Co., Ltd.: ELS-800).

0.01 Kg of this Powder A of LaB₆, and 8.7 kg of low-density polyethylene resin pellets were dry-mixed in a V-blender. And then, internal mixing was thoroughly carried out in the vicinity of 110°C in the neighborhood of the melting temperature of the low-density polyethylene resin, and this mixture was extrusion-molded at 110°C to form a film having a thickness of about 50 µm. The content of the LaB₆ fine particles in this film is equivalent to 0.13 g/m².

As to the film-like heat shielding material thus obtained, optical measurements were made, based on JIS A 5759 (1998) (light source: light A), to determine its visible light transmittance, solar radiation transmittance, and light transmittance in an ultraviolet region. However, samples to be measured were used just as they were in the form of a film without attachment to glass. To evaluate the transparency, the haze value was also measured according to JIS K 7105. The transparency increases with decreasing haze value.

As a result of the determinations, the visible light transmittance of the above-mentioned film-like heat shielding material was 72%, and its solar radiation transmittance was 52%. The difference between the visible light transmittance and the solar radiation transmittance was 20%. The heat shielding material was sufficient to transmit light in a visible light region, and at the same time, capable of screening 48% of direct incident light arising from sunlight. Thus, this heat shielding material has been found to have an improved heat shielding effect. Moreover, the haze value was 3.7%, and the transparency is so high that the indoor conditions of the facility can be fully confirmed even from the outside.

### [Comparative Example 1]

In Example 1 above, without addition of the LaB₆ fine particles as the heat shield filler, the low-density polyethylene resin was extrusion-molded to form a film having a thickness of about 50 µm. The visible light transmittance of the film thus obtained was 91%, and its solar radiation transmittance was 92%. The film was sufficient to transmit light in a visible light region, but the solar radiation transmittance was larger than the visible light transmittance. The film could only screen at most about 8% of direct incident light arising from sunlight. Thus, the heat shielding effect of this film has been found to be poor. Meanwhile, the haze value was 3.5%.

### [Example 2]

0.005 Kg of Powder A of LaB₆ prepared in Example 1 above, and 8.7 kg of low-density polyethylene resin pellets were dry-mixed in a V-blender. Then, as in Example 1, internal mixing was thoroughly carried out at 110°C in the neighborhood of the melting temperature of the low-density polyethylene resin, and this mixture was extrusion-molded at 110°C to form a film having a thickness of about 50 µm. The content of the LaB₆ fine particles in this film is equivalent to 0.065 g/m².

The film-like heat shielding material thus obtained was evaluated as in Example 1. The visible light transmittance was 82%, and the solar radiation transmittance was 68%. The difference between the visible light transmittance and the solar radiation transmittance was 14%. The heat shielding material was sufficient to transmit light in a visible light region, and at the same time, capable of screening 32% of direct incident light arising from sunlight. Thus, this heat shielding material has been found to have an improved heat shielding effect. Moreover, the haze value was 3.6%, and since the transparency is high, the indoor conditions of the facility can be fully confirmed even from the outside.

### [Example 3]

In Example 2 above, except that polypropylene resin pellets were used in place of the low-density polyethylene resin pellets, and the heating temperature was changed to a temperature (about 240°C) at which the polypropylene resin became sufficiently softened, a film was formed by the same method as employed in Example 2. The content of the LaB₆ fine particles in this film is equivalent to 0.065 g/m², which is equal to that in Example 2.

The film-like heat shielding material thus obtained was evaluated as in Example 1. The visible light transmittance was 80.9%, and the solar radiation transmittance was 65.7%. The difference between the visible light transmittance and the solar radiation transmittance was 15.2%. The heat shielding material was sufficient to transmit light in a visible light region, and at the same time, capable of screening about 34% of direct incident light arising from sunlight. Thus, this heat shielding material has been found to have an improved heat shielding effect. Moreover, the haze value was 2.3%, and the transparency has been found to be very high.

### [Comparative Example 2]

In Example 3 above, without addition of the LaB₆ fine particles as the heat shield filler, the polypropylene resin was extrusion-molded to form a film having a thickness of about 50 µm. The visible light transmittance of the film thus obtained was 90%, which was sufficient to transmit light in a visible light region, but the solar radiation transmittance was likewise 90%. There was no difference between the visible light transmittance and the solar radiation transmittance, and the film could only screen at most about 10% of direct incident light arising from sunlight. Thus, the heat shielding effect of this film has been found to be poor. Meanwhile, the haze value was 2.2%.

### [Example 4]

20 Parts by weight of ATO fine particles (specific surface area: 50 m²/g), 75 parts by weight of toluene, and 5 parts by weight of a dispersing agent were mixed, followed by dispersion treatment, thereby obtaining Dispersion B in which the fine particles of ATO with an average particle diameter of 75 nm had been dispersed. From this Dispersion B, solvent components were removed at 50°C with a vacuum dryer to obtain dispersion-treated Powder B of ATO.

0.4 Kg of this Powder B of ATO, and 8.65 kg of low-density polyethylene resin pellets were dry-mixed in a V-blender. And then, internal mixing was thoroughly carried out at 110°C in the neighborhood of the melting temperature of the low-density polyethylene resin, and this mixture was extrusion-molded at 110°C to form a film having a thickness of about 50 µm. The content of the ATO fine particles in this film is equivalent to 4.5 g/m².

The film-like heat shielding material thus obtained was evaluated as in Example 1. The visible light transmittance was 80.8%, and the solar radiation transmittance was 65%. The difference between the visible light transmittance and the solar radiation transmittance was 15.7%. The heat shielding material was sufficient to transmit light in a visible light region, and at the same time, capable of screening about 35% of direct incident light arising from sunlight. Thus, this heat shielding material has been found to have an improved heat shielding effect. Moreover, the haze value was 4.0%, and the transparency is at so a level that the indoor conditions of the facility can be fully confirmed even from the outside.

### [Example 5]

0.2 Kg of ATO Powder B prepared in Example 4, and 8.65 kg of low-density polyethylene pellets were dry-mixed in a V-blender. And then, internal mixing was thoroughly carried out at 110°C in the neighborhood of the melting temperature of the low-density polyethylene resin, and this mixture was extrusion-molded at 110°C to form a film having a thickness of about 50 µm. The content of the ATO fine particles in this film is equivalent to 2.25 g/m².

The film-like heat shielding material thus obtained was evaluated as in Example 1. The visible light transmittance was 86%, and the solar radiation transmittance was 75.5%. The difference between the visible light transmittance and the solar radiation transmittance was 10.5%. The heat shielding material was sufficient to transmit light in a visible light region, and at the same time, capable of screening about 25% of direct incident light arising from sunlight. Thus, this heat shielding material has been found to have an improved heat shielding effect. Moreover, the haze value was 3.7%, and the transparency is so high that the indoor conditions of the facility can be fully confirmed even from the outside.

### [Example 6]

10 Parts by weight of Dispersion A of the LaB₆ fine particles prepared in Example 1, and 100 parts by weight of hard-coating ultraviolet-curing resin (solid content: 100%) were mixed. The resulting liquid was coated, using a bar coater, on a polyethylene resin film (thickness: 50 µm), the surface of which had been corona-treated in advance. The coated layer was dried at 70°C for 30 seconds to evaporate the solvent, followed by curing of the coated layer with a high-pressure mercury lamp, thereby forming a heat shield layer on the polyethylene resin film.

The film-like heat shielding material thus obtained has a structure including a heat shield layer of a hard-coating ultraviolet-curing resin in which the LaB₆ fine particles have been dispersed, and as a matrix material, a polyethylene resin film on which this heat shield layer has been coated. Further, the heat shield layer of this film has a thickness of about 2 µm, and the content of the LaB₆ fine particles corresponds to 0.08 g/m².

The film-like heat shielding material thus obtained was evaluated as in Example 1. The visible light transmittance was 78%, and the solar radiation transmittance was 59.5%. The difference between the visible light transmittance and the solar radiation transmittance was 18.5%. The heat shielding material was sufficient to transmit light in a visible light region, and at the same time, capable of screening about 40% of direct incident light arising from sunlight. Thus, this heat shielding material has been found to have an improved heat shielding effect. Moreover, the haze value was 3.6%, and the indoor conditions of the facility can be fully confirmed even from the outside.

### [Example 7]

0.005 Kg of Powder A of LaB₆ prepared in Example 1, and 6.7 kg of polyvinyl chloride resin pellets were dry-mixed in a V-blender. Thereafter, 2.0 kg of DOP (dioctyl phthalate) as a plasticizer was added, and further mixing was performed. Subsequently, kneading was carried out in a mixing roll, and the mixture was molded by means of calendering into a film having a thickness of about 50 µm. The content of the LaB₆ fine particles in this film is equivalent to 0.065 g/m².

The film-like heat shielding material thus obtained was evaluated as in Example 1. The visible light transmittance was 79.8%, and the solar radiation transmittance was 66.5%. The difference between the visible light transmittance and the solar radiation transmittance was 13.3%. The heat shielding material was sufficient to transmit light in a visible light region, and at the same time, capable of screening about 34% of direct incident light arising from sunlight. Thus, this heat shielding material has been found to have an improved heat shielding effect. Moreover, the haze value was 4.8%, and the indoor conditions of the facility can be fully confirmed even from the outside.

### [Comparative Example 3]

In Example 7 above, without addition of the LaB₆ fine particles as the heat shield filler, the polyvinyl chloride resin and plasticizer DOP were calendered to form a film having a thickness of about 50 µm. The visible light transmittance of the film thus obtained was 89%, which was sufficient to transmit light in a visible light region, but the solar radiation transmittance was 90%. The solar radiation transmittance was larger than the visible light transmittance, and the film could only screen at most about 10% of direct incident light arising from sunlight. Thus, the heat shielding effect of this film has been found to be poor. Meanwhile, the haze value was 4.5%.

### INDUSTRIAL APPLICABILITY

As described above, the heat shielding material for an agricultural and horticultural facility according to the present invention is excellent in weather resistance and sufficient to transmit light in a visible light region, which light is necessary for working and plant growth in the facility. Simultaneously, it achieves efficient absorption or screening of near-infrared light, thereby providing an improved heat shielding effect as well as a moderate transmission of ultraviolet light or possible control of its transmission. It thus inhibits disease and insect damage from occurring and also enables insects such as honeybees, etc., to work fully actively for pollination. Accordingly, this heat shielding material is suitable for use as a roof material, an outer wall material, etc., in an agricultural house and a horticultural house.

## Claims

1. A heat shielding material for an agricultural and horticultural facility, comprising: a heat shield layer comprising a substrate resin and a heat shield filler in the form of fine particles dispersed in said substrate resin, wherein said heat shield filler is at least one selected from lanthanum hexaboride and antimony-doped tin oxide; and said substrate resin is at least one selected from polyethylene resin, polyvinyl chloride resin, polyvinylidene chloride resin, polyvinyl alcohol resin, polystyrene resin, polypropylene resin, poly(ethylene-vinyl acetate) resin and polyester resin.

2. A heat shielding material for an agricultural and horticultural facility according to claim 1, having a visible light transmittance in the range of 30 to 90%, and a solar radiation transmittance in the range of 10 to 80%, wherein said visible light transmittance is set to be larger by 10% or above than said solar radiation transmittance.

3. A heat shielding material for an agricultural and horticultural facility according to claim 1 or 2, wherein the content of said heat shield filler in said heat shield layer is in the range of 0.01 to 1 g/m² in case of the lanthanum hexaboride and in the range of 1.0 to 50 g/m² in case of the antimony-doped tin oxide. '

4. A heat shielding material for an agricultural and horticultural facility according to any of claims 1 to 3, being in a film- or board-like form consisting of said heat shield layer; or in a form in which said heat shield layer has been laminated on the surface of a film- or board-like matrix material, or has been sandwiched between two of said matrix material.
